# EUROPEAN PATENT SPECIFICATION

(11) **EP 2 363 544 B1**
(45) Date of publication and mention of the grant of the patent: **07.05.2014**
(21) Application number: 10155219.8
(22) Date of filing: 02.03.2010
(51) Int. Cl.: E04B 1/76, E04B 1/80

(54) **Insulating material made of recycled sheet material coated with a release agent**
Isoliermaterial aus mit einem Trennmittel beschichtetem wiederverwertetem Blattmaterial
Matériau d'isolation fabriqué en matériau de feuille recyclée recouvert d'un agent de libération

(43) Date of publication of application: 07.09.2011
(73) Proprietor: RecuLiner BVBA, 3450 Geetbets (BE)
(72) Inventor: Van Pottelbergh, Eric, 3450, Geetbets (BE); Verhasselt, Bart, 2830, Willebroek (BE)
(74) Representative: BiiP cvba

(56) References cited:
- EP-A1- 0 587 000
- DE-A1- 19 653 243
- JP-A- 2003 322 202
- US-A- 4 111 730

## Description

### Technical Field

The present invention relates to an insulation material made of treated waste cellulose or polymeric material and other components. In particular, the treated waste cellulose or polymeric material is coated with a release agent, in particular with silicone, such as used for liners of self-adhesive labels and the like.

### Background for the invention

Self adhesive labels, films, and tapes have become very popular for their versatility and ease of use, since no extra glue is required to make them adhere to a substrate. They are used extensively in offices and by school children of course, but also large volumes are used by industries for labelling their products. The self-adhesive labels are provided attached to a release liner made of paper or a polymeric carrier and usually coated at least on one side with a release agent, most often consisting of a silicone release layer, which provides a release effect against the adhesive of the label. Other release agents are sometimes used, such as wax, paraffin, low surface energy fluorinated compounds, etc. Examples of silicone coated liners are given in US5275855, JP07279099, and US6036234. Silicone or other release agent coated liners are also used more generally as backing in the production of films, such as PVC films. The total global consumption of release liners in 2008 is believed to be around 32 Billion square meter of coated product, which is equal to 75% of the surface area of Switzerland. Approximately 85% of this material is paper based and 1 5% is plastic based (cf. http://en.wikipedia.org/wiki/Release_liner).

After use of the labels, films or tapes supported on said carriers, the liners are pure waste and must be disposed of. Considering the volumes mentioned above, this results in a great source of waste, which is coming under the scrutiny of several governments which intend to tax the disposal thereof as packaging material. The issue is rendered even more sensitive for cellulose release liners because the cellulose carriers are usually made of virgin material which has never gone through any recycling cycle yet. Recycling paper coated with a release agent for making printing or packaging paper is possible but difficult without loss in quality because of insufficient disintegration of the fibres and sticking of resin particles on the rolls and felts due to the release coating. Solutions to recycle silicone coated paper were proposed in US5567272 and EP587000, requiring the use of salts of phosphoric esters of fluorinated alkanols.

The building and transportation industries are making more and more use of cellulosic materials coming from old newspaper, cardboard, etc. to manufacture heat and acoustic insulating materials in the form of loose fibrous materials, fibrous mats with or without skins, panels of varying stiffness, and even hollow blocks; the manufacture of blocks and panels may require the use of a binder, a glue or a cement. Cellulose insulating material has a much lower "embodied energy" than e.g., glasswool or rockwool insulation, wherein the embodied energy is the sum of the energy to transport the raw material to the manufacturing facility + the energy for manufacturing the product + the energy to deliver the manufactured product. General information concerning cellulose insulating materials can be found e.g., in:
http://www.ownerbuilderonline.com/blown-cellulose-insulation.html,
http://www.cellulose.org/CIMA/GreenestOfTheGreen.php;
http://www.youtube.com/watch?v=bwcblg6g5Cs&feature=related.

DE196553243 discloses a heat and acoustic insulating material made of cellulose fibres from old paper and impregnated with e.g. boric acid or salts thereof as flame retardant and against formation of mould, wherein the cellulose fibres come at least partly from sticky paper labels. This material can then be used as such by spraying it against a surface.

DE4334200 discloses a process for producing thermally insulating materials from waste paper by means of a mild hydromechanical treatment with subsequent drying using hot air.

The boards or mats formed therefrom have a very low specific density, from which a high thermal insulation value results.

WO2002090682 discloses sound insulation partitions comprising at least a substantially homogeneous self-supporting rectangular cellulose mat having a density ranging between 200 and 800 kg/m³, said mat essentially consisting of fibres derived from the treatment of practically lignin-free recycled papers or paperboards, the bond between the fibres within the mat being obtained at least partly during the production of the mat by wet process.

DE4402244 discloses a sound and heat insulating material made from a dried, aqueous suspension containing 10-50 wt% chopped waste paper and 90-10 wt% animal and/or plant fibres such as hairs, short wool fibres, etc. The mixed suspension is placed on a sheet former, in particular on a sieve, where the water is removed. A flat flexible mat is formed and subsequently dried and finished.

DE19835090 discloses a method of production of cellulose insulation materials including the control of various parameters in the mill to obtain a homogeneous material comprising additives.

DE3641464 discloses an insulating board made of a mixture of old newspapers free fom any surface treatment or fillers, natural fibres, and a glue and/or reaction promoter. EP061 7177 discloses a skin/core building element for heat insulation and vibration damping wherein the core is made of a filler of paper like material and thin thermoplastic component to act as binder upon melting.

DE4403588 discloses heat insulation components constructed in the form of hollow blocks and prefabricated wall boards, produced, in particular, from pulped, water-resistant old paper, such as old labels, stickers, high-gloss paper, advertising posters and billboards (signs), mixed with water, cement and sand. In particular, a preferred mixture ranges from 50 vol% to 80 vol% of water-resistant old paper, from 10 vol% to 20 vol% of cement, and from 10 vol% to 60 vol% of sand.

US2009/01 73464 discloses an acoustic panel comprising from 10―40 wt% cellulosic fibres, 0-30 wt% gypsum, 0-15 wt% starch and other components. Similarly, DE10336569 discloses a fire-resistant gypsum fibreboard made from a mixture of 87-78% gypsum and 13―22% cellulose fibres made from used paper as a reinforcing component and a 35-50% boric acid based on the fibre weight for raising the flame resistance.

In the transportation industry, DE20200550114581 discloses a cellulose based insulation material for the exhaust system of a combustion engine and US2002025421 discloses a sound absorbing insulation material containing cellulose for the cabin of a motor vehicle. DE4331 567 discloses a light weight fire protection element for the aircraft industry made of waste paper mixed with a special binder, resulting in an "apparently paradoxical fireproof material made of paper".

There remains in the art a need for finding routes to recycle silicone coated carriers of the type used as liners for labels. In parallel, there remains a lot to do in the field of insulation materials for the building, transportation, and other industries to provide an insulation material which is cheap, and has good thermal and acoustic insulation and damping properties.

### Summary of the invention

The present invention concerns an insulation material comprising shredded recycled material, flame retardant, and optionally other components, characterized in that, the recycled material consists essentially of sheet material coated with a release agent, wherein the sheet material is selected from cellulose material and thermoplastic material and in that the recycled material is ground to an average particle size smaller than 4 mm. The release agent can be any of silicone, wax, paraffin, and fluorinated material, with silicone being preferred as it is used in many applications. In particular, the carrier may be paper, preferably glassine paper or kraft paper and, the silicone coated paper may advantageously be a liner for adhesive labels, tapes, or films. Alternatively, the carrier may be a thermoplastic film, preferably PE, PP, or PET and, the silicone coated thermoplastic film may as well be a liner for adhesive labels, tapes, or films.

The insulation material according to the present invention may be used in a particulate form by blowing it dry into a cavity, or wet against a surface to which it adheres. Alternatively, the Insulation material may be in the form of a batt, a tile, or a sheet and may or not comprise a binder to stabilize the structure. The batt or sheet may also be coated by a skin layer on one or both major surfaces thereof, forming in the latter case a sandwich structure.

Any flame retardant known in the art can be used in the context of the present invention, as for example, boric acid or any salt thereof. Its use is particularly advantageous because it is also useful against the formation of mould, and as repellent against insects and other pests like rodents, bugs, or the like.

The present invention also concerns a method for thermally and/or acoustically insulating a building or a means of transportation comprising applying to a wall of said building or means of transportation an insulation material as defined supra by spraying it substantially dry into a cavity, by spraying it wet against a wall, or by applying batts, tiles, or sheets made of said material.

The present invention also concerns the use of recycled release coated cellulose material or release coated thermoplastic film for the production of heat and/or sound insulation material. The expression "release coated" material meaning here that a material is coated with a release agent. The insulation material of the present invention may be used in several applications, such as for insulating thermally and/or acoustically any of:
- a wall in the field of buildings,
- a panel in the field of transportation,
- a quilted piece of garment or blanket,
- a sound dampening wall along roads
or for mechanically dampening:
- a mattress, or upholstery, or
- a package in the field of packaging and storage and transportation of goods.

The present invention finally concerns a method for producing an insulation material comprising the following steps:
(a) Collecting release coated sheets from producers and end-users thereof;
(b) Preparing the collected material for shredding by mixing, separating foreign bodies like metals, etc.;
(c) Shredding the materials into small pieces, preferably into stripes of an average length comprised between 5 and 30 mm, more preferably, between 7 and 20 mm, most preferably between 10 and 15 mm;
(d) Grinding the stripes to an average particle size preferably smaller than 4 mm, more preferably smaller than 2 mm; most preferably smaller than 1 mm.
(e) Adding a flame retardant and mixing with the recycled material;
(f) Optionally forming a batt or a sheet by a wet process and/or by adding a binder.

### Brief description of the Figures

For a fuller understanding of the nature of the present invention, reference is made to the following detailed description taken in conjunction with the accompanying drawings in which:
Figure 1 shows a transversal cut of a release coated carrier, typically used as liner for adhesive labels and the like.
Figure 2 shows three embodiments of how to apply the insulating material of the present invention to a surface.

### Detailed description of the invention

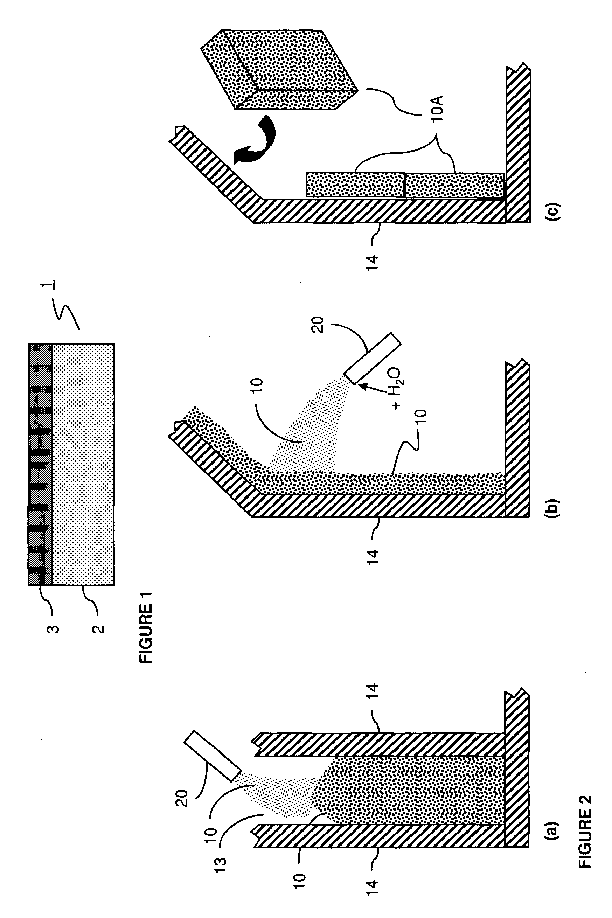

The present invention offers a new and advantageous solution to the difficult problem of recycling release coated sheet carriers (1), in particular silicone coated carriers which are widely used e.g., as liners for self adhesive labels, tapes, films and the like. As illustrated in Figure 1, such liners comprise a carrier (2) which is often a cellulose material, such as glassine paper or kraft paper, or alternatively, the carrier (2) can be a thermoplastic film, made of a polyolefin like PE or PP, or of a polyester such as PET, PEN, etc. In the present context, the term "sheet" is used to designate "a wide expanse or thin piece of something" (The Chambers Dictionary (2000)), which can be continuous or in discreet pieces of regular or irregular geometry, presented in any form such as rolled, stacked, or even crumpled. The carrier (2) is coated on one or two sides with a release agent (3), which provides a release effect against any type of sticky material such as the adhesive on a label. The release agents (3) most widely used on liners for adhesive labels, tapes, films, and the like, are crosslinkable silicones. The release agent is generally applied in an amount of the order 0.2 to 2.0 g / m², which is enough to degrade the quality of paper recycled with such cellulose based liners, because the disintegration of the fibres is insufficient and the resin particles tend to stick on the rolls and felts. This is a major inconvenience because unlike newspapers and the like, paper used for liners is generally produced from virgin material, which has never gone through any recycling cycle and has therefore a high ecological value. As reviewed above, solutions exist to overcome this drawback, but they require additional treatment steps and chemicals. The problem is even more acute when the carrier is a thermoplastic film since the generally crosslinked release coating cannot be easily separated from the carrier and may not be melted and reprocessed therewith.

The present invention provides a particularly advantageous alternative method for recycling both cellulose and thermoplastic based release coated carriers (1) such as liners. In the present invention, the release coated carrier is processed to form a novel and advantageous insulating material (10) suitable for the sound and thermal insulation of buildings and of sound barriers along the roads, as well as of means of transportation such as automotive vehicles, trains, airplanes, and the like. It can also be used to fill quilted garments and blankets, or upholstery. In the context of the present invention, the expression "the recycled material consists essentially of sheet material coated with a release agent," is to be understood as consisting of more than 50 wt% of release coated sheet material with respect to the total amount of recycled material, preferably at least 80 wt%, more preferably at least 90 wt% or 95 wt%, and most preferably, at least 98 wt%. It is advantageous that the recycled material consists solely of recycled release coated carrier, but it is difficult to ensure such target with recycled material.

The recycled material can be collected from the end users of adhesive labels, etc. like offices, administrations, and also from industries using large amounts of labels for labelling their products. The latter is a particularly advantageous source of "clean" recycling release coated carriers, since the labelling of the products is carried out by a machine which can be adapted to automatically separate and store apart the used liners ready for evacuation, as disclosed e.g., in W02005110902. Alternatively, the release coated material can be recovered from label manufacturers, which buy large rolls of silicone coated material that will be cut into pieces of various sizes to fit the geometry of the labels they will be applied to. Finally, the producers of the silicone coated material may also generate substantial scrap, such as with batches of lower quality, or at the beginning of new rolls, etc. Here again, the recycled material is particularly uncontaminated with other types of materials.

The insulating material (10) of the present invention comprises shredded and ground particles of recycled release coated sheet material admixed with additives to control the resistance to flame, moisture, and pests, such as insects, bugs, rodents, etc. The production of the present insulating material includes the preparation of the collected release coated material waste for the shredding by conveying the material into a mixer, where the material is mixed, ripped, etc. and the non processable elements such as metal clips and staples are separated by means well known in the art. The material is then transferred to a shredder where it is reduced into small stripes or particles. The stripes have an average length comprised between 5 and 30 mm, more preferably, between 7 and 20 mm, most preferably between 10 and 15 mm; Several shredding stations may be used to reach the desired size, but generally a single shredder should suffice. The shredded stripes are then ground in one or several grinding stations to an average particle size smaller than 4 mm, preferably smaller than 2 mm; more preferably smaller than 1 mm, depending on the application. At some stage, preferably after shredding, and either before, during, or after the grinding stage, a flame retardant is added to and mixed with the material to allow it to fulfil the stringent flame requirements in both building and transportation industries. Boric acid or any salt thereof is the most commonly used flame retardant and is particularly advantageous, since not only does it provide the required resistance to flame but it also provides moisture, mould, and microbial resistance and acts as a repellent against pests of different kinds. Salts of boric acid that can be used are for example, borax with different levels of hydratation, such as borax penthahydrate and borax decahydrate. Boric acid or salts thereof may be applied in an amount comprised between 1 and 50 wt%, preferably between 10 and 45 wt%, more preferably between 25 and 40 wt%. It can be added to the recycled material as dry powder but is usually mixed with water and wet sprayed into the recycled material. Other flame retardants, however, may be used instead of or additionally with the boric acid or salt thereof, such as mono- or diammonium sulphate, aluminium sulphate, soda ash, anhydrous silica gel, diammonium phosphate, sodium tetraborate, ferrous sulfate, zinc sulfate, and mixtures thereof, as disclosed, e.g., in US41 82681.

The thus obtained mixture of recycled material and flame retardant can then be dried to obtain a dry powder material for spraying or, alternatively, can be formed into a sheet, batt, or the like by e.g., forming a wet slurry and depositing it onto a foraminous wire for dewatering. Depending on the desired end product, a press may be used, and/or a binder may be added to the slurry. Other additives or fillers may of course be added as well known by the persons skilled in the art.

When cellulose insulation material has a lower "embodied energy" than e.g., glass fibres or rockwool insulation materials, the insulation material of the present invention has an even lower embodied energy than most traditional cellulose insulation materials for the following reasons. Traditional cellulose material is generally made of recycled paper of various origins, including newspapers, printed matter, wrapping papers, etc., which must be deinked before being reprocessed into insulation material. The deinking process usually involves a thermal treatment with chemicals, which is not necessary with used liners collected from industrial end users, as the material is homogeneous and devoid of any printed matter. Another advantage of the insulation material of the present invention is that packaging volume can be reduced with respect to most traditional cellulose insulation materials on the market. Particulate cellulose insulation material is generally supplied in 10-15 kg packages with a degree of compaction which is limited by the ability of the compacted material to fluff up to the desired density upon dry spraying thereof. Generally, the degree of compaction of the packaged materiel is about double of the desired density of the insulation material in place when applied dry, i.e., with one package of volume V₁, a cavity of volume of the order of 2 x V₁ can be filled. It has been found that insulation material according to the present invention could be dry sprayed to a desired density even when the material was packaged with a degree of compaction of three or four (i.e., down to a volume of the order of ½ V₁). Without being bound by any theory, it is believed that this is explained by the fact that cellulose liners being produced from virgin material, the cellulose fibres are longer and stiffer than the ones of recycled newspapers and the like. Hence the particulate material obtained by grinding used liners has a higher spring force than most traditional cellulose insulation materials which allows it to recover a high degree of fluffiness after compaction to at least 400% in a package. The higher degree of compaction is, of course, highly advantageous for storage and distribution of the products. These two advantages: no thermal and chemical deinking stage required and higher degree of compaction of the packaged material lowers substantially the embodied energy of the insulation material of the present invention in both the energy required to manufacture the material and in the energy to deliver it.

As illustrated schematically in Figure 2, the new insulating material (10) of the present invention may be applied in different forms and different ways to a surface; As shown in Figure 2(a) the insulating material (10) may be blown in a dry form with a gun (20) into a cavity (13) formed by two panels or walls or any retainer (14). In old houses, the material can be sprayed through a hole drilled on top of the outer panel of a wall. The insulation material (10) must be sprayed until it reaches the appropriate density. With this form of application settling is observed and may reach as much as 20% with state of the art cellulose insulation materials. It is usually observed that a lower degree of settling occurs with higher initial densities. The level of settling is very much reduced with the insulation material of the present invention since the silicone acts somewhat like a loose binder that stabilizes the structure. After settling of the material, the front panel may be withdrawn if desired as, depending on the degree of compaction thereof, the material will remain in place. The application of the insulating material (10) by dry blowing has the advantages of minimizing air gaps especially around inserts or intricate regions. It is, however, recommended to call an experienced installer for dry spraying the insulation material as the control of the density, settling, and pressure applied on the panels must all be controlled carefully.

The insulating material (10) in a particulate form may also be sprayed in place with a gun (20) against a wall (14) or even a horizontal ceiling by mixing it with a fluid like water. Upon drying the material will remain in place thanks to the hydrogen bonds between cellulose hydroxyl groups created by the fluid such as water. In case the carrier (2) is a thermoplastic material, the use of a binder may be necessary in this type of applications. This technique of wet spraying is schematically illustrated in Figure 2(b) and it has the advantage over dry spraying of requiring no cavity (13) to fill, of generating substantially less dust upon application, and of settling much less. Air gaps are minimized with this technique, thus enhancing the insulation properties of the material. Here again, calling an experienced installer is highly recommended.

As an alternative to supplying the insulation material (10) in a particulate form for spraying, it can be supplied as preforms (10A) such as batts, sheets, mats, tiles, or even bricks. Here again, the use of a binder may be necessary, but not mandatory, as with cellulose materials sufficient integrity of the preforms may be obtained through a wet process. If a binder is used, it can be organic, like a glue or a resin, or mineral like cement, gypsum, etc. Fillers like sand, talc, etc. may be used too. Alternatively, the preforms (10A) may have a sandwich structure with two skins holding a central core made of the insulating material (10). In some instances, a single skin may be sufficient. The role of the skins is not restricted to mechanical integrity of the preforms (10A), but may advantageously act as a barrier against moisture, gas, radiations, etc. and can therefore be useful when a binder is used too.

As illustrated in Figure 2(c), such preforms can then simply be applied and fixed to a wall by means well known in the art. This solution has the advantage of being very simple and of requiring no particular expertise for its implementation, and it also generates virtually no dust in situ. On the other hand, air gaps are more difficult to avoid then with spraying techniques.

Figure 2 illustrates embodiments of applications in the insulation of a building. The insulation material of the present invention can be used in other fields such as the transportation industry, e.g., in applications as disclosed e.g., in DE20200550114581 and US2002025421 for the automotive industry and in DE4331567 for the aircraft industry. It can also be used on sound dampening wall along roads. Other applications can be found in the textile industry, as fill for quilted garments and blankets or even for upholstery and mattresses.

Beside providing a cheap and easy recycling option for the problematic release coated sheet carriers, the insulation material of the present invention is advantageous over other similar materials of the prior art because the presence of the generally crosslinked release agent such as silicone gives the particulate material a cohesion which cannot be found in the prior art materials without the addition of a separate binder. This cohesion is advantageous in dry spray applications (cf. Figure 2(a)) because it reduces substantially the amount of dust upon spraying, and it especially reduces substantially the level of settling of the material, yielding an insulation layer stable in time and homogeneous throughout the height of the insulated wall. In wet spraying applications (cf. Figure 2(b)), a higher mechanical integrity of the sprayed layer is reached thanks to the release agent. For the manufacture of preforms (10A) such as batts, sheets, etc. (cf. Figure 2(c)), less to no binder is needed to yield self supporting preforms. In all cases, the presence of silicone particles dispersed within the bulk of the insulating material confers a degree of water repellence, which contributes to preserving the material from moisture. Furthermore, traditional insulation materials are made of recycled pape, of different origins (landfills) and of unknown nature (newspaper, packaging, etc.). For this reason and in spite of any thermal treatments discussed above, such insulation materials may still contain an undesired amount of VOC (volatile organic compounds) which contribute to indoor air pollution; and may be responsible for the development of allergies (cf. e.g., http://www.healthyhouseinstitute.com/a_688-Cellulose_Insulation). With the present invention, it is possible to obtain an insulation material which, apart from the flame retardants, is virtually free of any VOC. In particular, since large volumes of release coated sheet material can be recovered directly from companies, a control on the quality of the waste material to be recycled never afforded to date is possible, thus allowing to provide a "premium version" of VOC-free insulation material.

## Claims

1. Insulation material comprising shredded recycled material, flame retardant, and optionally other components, **characterized in that**, the recycled material consists essentially of sheet material coated with a release agent, wherein the sheet material is selected from cellulose material and thermoplastic material, and **in that**, the recycled material is ground to an average particle size smaller than 4 mm.

2. Insulation material according to claim 1, wherein the release agent is selected from silicone, wax, paraffin, and fluorinated material.

3. Insulation material according to claim 1 or 2, wherein the sheet material is paper, preferably glassine paper or kraft paper which is preferably a liner for adhesive labels, tapes, or films, and is preferably coated with silicone.

4. Insulation material according to claim 1 or 2, wherein the sheet material is a thermoplastic film, preferably PE, PP, or PET which is preferably a liner for adhesive labels, tapes, or films, and is preferably coated with silicone.

5. Insulation material according to any of the preceding claims, wherein it is in a form suitable for blowing it dry into a cavity, or wet against a surface.

6. Insulation material according to any of claims 1 to 4, wherein it is in the form of a batt or a sheet.

7. Insulation material according to the preceding claim, further comprising a binder.

8. Insulation material according to any of claims 1 to 6, comprising no additional binder.

9. Insulation material according to any of claims 6 to 8, wherein the insulation material is coated by a skin layer on one or both major surfaces of the batt or sheet, forming in the latter case a sandwich structure.

10. Insulation material according to any of the preceding claims, comprising a flame retardant, preferably boric acid or any salt thereof.

11. Insulation material according to any of the preceding claims, wherein the recycled material is ground to an average particle size smaller than 2 mm; preferably smaller than 1 mm.

12. A method for thermally and/or acoustically insulating a building or a means of transportation comprising applying to a wall of said building or means of transportation an insulation material according to any of the preceding claims by spraying it substantially dry into a cavity, by spraying it wet against a wall, or by applying batts or sheets made of said material.

13. A method for producing an insulation material comprising the following steps:
(a) Collecting release coated cellulose or polymeric sheets from producers and end-users thereof;
(b) Preparing the collected material for shredding by mixing, separating foreign bodies like metals, etc.;
(c) Shredding the materials into small pieces, preferably into stripes of an average length comprised between 5 and 30 mm, more preferably, between 7 and 20 mm, most preferably between 10 and 15 mm;
(d) Grinding the stripes to an average particle size smaller than 4 mm, more preferably smaller than 2 mm; most preferably smaller than 1 mm.
(e) Adding a flame retardant and mixing with the recycled material;
(f) Optionally forming a batt or a sheet by a wet process and/or by adding a binder.

14. Use of a recycled cellulose or thermoplastic sheet material coated with a release agent after processing through steps (b) to (e) of claim 13 for the production of heat and/or sound insulation material, wherein said recycled cellulose or thermoplastic sheet material coated with a release agent is present in an amount of at least 50 wt% of the total weight of recycled material present in the insulation material.

15. Use of an insulation material according to any of claims 1 to 11 for insulating thermally and/or acoustically any of:
• a wall or a panel in the field of buildings,
• a panel in the field of transportation,
• a sound dampening wall along roads;
• a quilted piece of garment or blanket, or for filling
• a mattress, or upholstery,
a package in the field of packaging and storage and transportation of goods.

## Patentansprüche

1. Isoliermaterial bestehend aus geschreddertem Recyclingmaterial, schwer entflammbar und optional aus anderen Komponenten, **dadurch gekennzeichnet, dass** das Recyclingmaterial im Wesentlichen aus einem mit Trennmittel beschichtetem Plattenmaterial besteht, wobei das Plattenmaterial aus Zellulose- und Thermoplastmaterial ausgewählt wird, und dass das Recyclingmaterial auf eine durchschnittliche Teilchengröße kleiner als 4 mm geschliffen wird.

2. Isoliermaterial gemäß Anspruch 1, wobei als Trennmittel Silikon, Wachs, Paraffin und fluoriertem Material gewählt wird.

3. Isoliermaterial gemäß Anspruch 1 oder 2, wobei das Plattenmaterial Papier ist, vorzugsweise Pergaminpapier oder Kraftpapier ist, das vorzugsweise eine Lage für Klebstoffe, Klebebänder oder Folien ist, und vorzugsweise mit Silikon beschichtet ist.

4. Isoliermaterial gemäß Anspruch 1 oder 2, wobei das Plattenmaterial eine Thermoplastfolie ist, vorzugsweise PE, PP oder PET, die vorzugsweise eine Lage für Klebstoffe, Klebebänder oder Folien ist, und vorzugsweise mit Silikon beschichtet ist.

5. Isoliermaterial gemäß einem der vorherigen Ansprüche, wobei es eine geeignete Form aufweist, damit es trocken in einen Hohlraum, oder nass auf eine Oberfläche gesprüht werden kann.

6. Isoliermaterial gemäß einem der Ansprüche 1 bis 4, wobei es die Form einer Matte oder einer Platte hat.

7. Isoliermaterial gemäß dem vorherigen Anspruch, das außerdem über ein Bindemittel verfügt.

8. Isoliermaterial gemäß einem der Ansprüche 1 bis 6, das über kein zusätzliches Bindemittel verfügt.

9. Isoliermaterial gemäß einem der Ansprüche 6 bis 8, wobei das Isoliermaterial mit einer Deckschicht auf einer oder beiden großen Flächen der Matte oder Platte beschichtet ist, wodurch im letzteren Fall eine Schichtstruktur gebildet wird.

10. Isoliermaterial gemäß einem der vorherigen Ansprüche, das einen Flammenhemmstoff umfasst, vorzugsweise Borsäure oder eines Salzes davon.

11. Isoliermaterial gemäß einem der vorherigen Ansprüche, wobei das Isoliermaterial auf eine durchschnittliche Teilchengröße kleiner als 2 mm, vorzugsweise kleiner als 1 mm, geschliffen wird.

12. Eine Methode zur Wärme und/oder Schalldämmung eines Gebäudes oder Transportmittels, bestehend aus der Anwendung eines Isoliermaterials gemäß einem der vorherigen Ansprüche auf eine Wand des Gebäudes oder Transportmittels, indem es im Wesentlichen trocken in einem Hohlraum, nass gegen eine Wand gesprüht wird, oder indem Matten oder Platten aus diesem Material angewendet werden.

13. Eine Methode zur Herstellung eines Isoliermaterials bestehend aus den folgenden Schritten:
(a) Sammeln der mit Trennmittel beschichteten Zellulose- oder Polymerplatten von den Herstellern und deren Endbenutzern;
(b) Vorbereitung des gesammelten Materials für das Schreddern durch Abtrennen von Fremdkörpern wie z. B. Metallen usw.;
(c) Schreddern des Materials in kleine Teilchen, vorzugsweise in Streifen mit einer durchschnittlichen Länge zwischen 5 und 30 mm, besonders vorzugsweise zwischen 7 und 20 mm und höchst vorzugsweise zwischen 10 und 15 mm;
(d) Schleifen der Streifen auf eine durchschnittliche Teilchengröße kleiner als 4 mm, besonders vorzugsweise kleiner als 2 mm und höchst vorzugsweise kleiner als 1 mm.
(e) Hinzufügen eines Flammenhemmstoffs und Vermischen mit dem Recyclingmaterial;
(f) Als Option das Formen einer Matte oder Platte durch einen Nassprozess und/oder durch Hinzufügen eines Bindemittels.

14. Verwendung eines mit Trennmittel beschichteten recycelten Zellulose- oder Thermoplast-Plattenmaterials nach Verarbeitung mittels der Schritte (b) bis (e) im Anspruch 13 für die Herstellung eines Wärme- und/oder Geräuschdämmmaterials, wobei das mit Trennmittel beschichteten recycelte Zellulose- oder Thermoplast-Plattenmaterial mit einem Gehalt von mindestens 50 Gew.-% des Gesamtgewichts des recycelten Materials im Isoliermaterial enthalten ist.

15. Verwendung eines Isoliermaterials gemäß einem der Ansprüche 1 bis 11 für die Wärme- und/oder Geräuschdämmung von:
einer Wand oder Platte in Gebäudeumgebung,
einer Platte im Transportwesen,
einer Schalldämmmauer an Straßen,
eines gesteppten Tuchs oder einer Decke, oder zur Füllung,
einer Matratze oder Polsterung,
einer Verpackung in Bereich von Verpackungen und Lagerung und Gütertransport.

## Revendications

1. Matériau d'isolation comprenant un matériau recyclé déchiqueté, un produit ignifuge, et éventuellement d'autres composants, **caractérisé en ce que** le matériau recyclé est constitué essentiellement de matériau en feuille revêtu d'un agent antiadhésif, dans lequel le matériau en feuille est choisi parmi un matériau à base de cellulose et un matériau thermoplastique, et **en ce que** le matériau recyclé est broyé à une taille moyenne de particules inférieure à 4 mm.

2. Matériau d'isolation selon la revendication 1, dans lequel l'agent antiadhésif est choisi parmi la silicone, la cire, la paraffine, et un matériau fluoré.

3. Matériau d'isolation selon la revendication 1 ou 2, dans lequel le matériau en feuille est du papier, de préférence du papier cristal ou du papier kraft qui est de préférence un support détachable pour étiquettes, rubans, ou films adhésifs, et est de préférence revêtu de silicone.

4. Matériau d'isolation selon la revendication 1 ou 2, dans lequel le matériau en feuille est un film thermoplastique, de préférence en PE, PP, ou PET qui est de préférence un support détachable pour étiquettes, rubans, ou films adhésifs, et est de préférence revêtu de silicone.

5. Matériau d'isolation selon l'une quelconque des revendications précédentes, qui se trouve sous une forme appropriée pour soufflage à l'état sec dans une cavité, ou à l'état humide contre une surface.

6. Matériau d'isolation selon l'une quelconque des revendications 1 à 4, se trouvant sous la forme d'un matelas ou d'une feuille.

7. Matériau d'isolation selon la revendication précédente, comprenant en outre un liant.

8. Matériau d'isolation selon l'une quelconque des revendications 1 à 6, ne comprenant aucun liant supplémentaire.

9. Matériau d'isolation selon l'une quelconque des revendications 6 à 8, dans lequel le matériau d'isolation est revêtu par une couche formant une peau sur une ou sur les deux surfaces principales du matelas ou de la feuille, en formant dans ce dernier cas une structure sandwich.

10. Matériau d'isolation selon l'une quelconque des revendications précédentes, comprenant un produit ignifuge, de préférence de l'acide borique ou n'importe quel sel de celui-ci.

11. Matériau d'isolation selon l'une quelconque des revendications précédentes, dans lequel le matériau recyclé est broyé à une taille moyenne de particules inférieure à 2 mm ; de préférence inférieure à 1 mm.

12. Procédé pour isoler thermiquement et/ou acoustiquement un bâtiment ou un moyen de transport, comprenant l'application à une paroi dudit bâtiment ou moyen de transport d'un matériau d'isolation selon l'une quelconque des revendications précédentes en le pulvérisant à l'état substantiellement sec dans une cavité, en le pulvérisant à l'état humide contre une paroi, ou en appliquant des matelas ou feuilles constituées dudit matériau.

13. Procédé de fabrication d'un matériau d'isolation comprenant les étapes suivantes :
(a) Collecte de feuilles cellulosiques ou polymères à revêtement antiadhésif auprès de producteurs et d'utilisateurs finaux de celles-ci ;
(b) Préparation du matériau collecté pour le déchiquetage par mélange, séparation des corps étrangers de type métaux, etc. ;
(c) Déchiquetage des matériaux en petites pièces, de préférence en bandes d'une longueur moyenne comprise entre 5 et 30 mm, mieux encore, entre 7 et 20 mm, de manière préférée entre toutes entre 10 et 15 mm ;
(d) Broyage des bandes à une taille moyenne de particules inférieure à 4 mm, mieux encore inférieure à 2 mm, de manière préférée entre toutes inférieure à 1 mm
(e) Ajout d'un produit ignifuge et mélange avec le matériau recyclé ;
(f) Éventuellement, formation d'un matelas ou d'une feuille par un procédé par voie humide et/ou en ajoutant un liant.

14. Utilisation d'un matériau en feuille cellulosique ou thermoplastique recyclé revêtu d'un agent antiadhésif après traitement à travers les étapes (b) à (e) selon la revendication 13 pour la production d'un matériau d'isolation thermique et/ou phonique, dans laquelle ledit matériau en feuille cellulosique ou thermoplastique recyclé revêtu d'un agent antiadhésif est présent en une quantité d'au moins 50% en poids du poids total de matériau recyclé présent dans le matériau d'isolation.

15. Utilisation d'un matériau d'isolation selon l'une quelconque des revendications 1 à 11 pour isoler thermiquement et/ou acoustiquement n'importe lequel parmi :
une paroi ou un panneau dans le domaine des bâtiments,
un panneau dans le domaine du transport,
un mur antibruit le long des routes ;
une pièce matelassée de vêtement ou de couverture, ou pour remplissage
un matelas, ou un tissu d'ameublement,
un emballage dans le domaine du conditionnement et du stockage et du transport de marchandises.
